(19) Europäisches Patentamt
European Patent Office
Office européen des brevets

(11) Veröffentlichungsnummer: **0 236 554**
**A1**

(12) **EUROPÄISCHE PATENTANMELDUNG**

(21) Anmeldenummer: **86115869.9**

(22) Anmeldetag: **14.11.86**

(51) Int. Cl.4: **C08L 77/00** ,
//(C08L77/00,71:04)

(30) Priorität: **09.01.86 DE 3600366**

(43) Veröffentlichungstag der Anmeldung:
**16.09.87 Patentblatt 87/38**

(84) Benannte Vertragsstaaten:
**AT BE DE FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Jadamus, Hans, Dr.**
**Hervester Strasse 8**
**D-4370 Marl(DE)**
Erfinder: **Bartmann, Martin, Dr.**
**Burgstrasse 35**
**D-4350 Recklinghausen(DE)**

(54) **Thermoplastische Formmassen.**

(57) Die Erfindung betrifft thermoplastische Formmassen aus einem Polyphenylenether, einem Kammpolymer mit einem Kohlenwasserstoffharz als Hauptkette und Polyphenylenether-Seitenketten, einem funktionalisierten Polyethylen, einem Polyamid und ggf. weiteren Polymeren. Formteile aus diesen Polmermischungen weisen eine verbesserte Schlagfestigkeit und Wärmeformbeständigkeit auf.

EP 0 236 554 A1

## Thermoplastische Formmassen

Die Erfindung betrifft thermoplastische Formmassen aus einem Polyphenylenether, einem Kammpolymeren, einem funktionalisierten Polyethylen, einem Polyamid und ggf. weiteren Polymeren und Zusatzstoffen.

Polyphenylenether sind technische Hochleistungsthermoplaste mit hohen Viskositäten und Erweichungspunkten. Sie eignen sich für zahlreiche technische Anwendungen, bei denen es auf Beständigkeit bei hohen Temperaturen ankommt. Diese Polykondensate sind u. a. beschrieben in den US-PSS 3 306 874, 3 306 875, 3 257 357 und 3 257 358. Sie haben jedoch den Nachteil, daß sie spröde sind. Außerdem lassen sich die Polyphenylenether schlecht verarbeiten, da wegen der hohen Erweichungspunkte und Schmelzviskositäten hohe Temperaturen und hohe Scherkräfte aufgewendet werden müssen, was zu ihrer Schädigung führen kann.

Man hat deshalb versucht, durch Abmischungen mit anderen Polymeren die Verarbeitbarkeit der Polyphenylenether und die Schlagfestigkeit der Produkte zu verbessern.

Bekannt sind vor allem Gemische von Polyphenylenethern mit schlagzähem Polystyrol.

Es gibt auch Abmischungen von Polyphenylenethern mit Polyamiden. Diese Mischungen weisen eine gute Fließfähigkeit und auch eine gute Lösemittelbeständigkeit auf (DE-AS 16 94 290). Es werden aber in der Regel spröde Produkte erhalten, da die beiden Komponenten unverträglich und deshalb schlecht ineinander dispergierbar sind. Aromatische Polyamide, wie sie beispielsweise gemäß EP-OS 0 131 445 eingesetzt werden, lassen sich zudem mit Polyphenylenethern schlecht verarbeiten. Eine bessere Verträglichkeit der beiden Phasen wird durch eine Funktionalisierung des Polyphenylenether, z. B. mit Maleinsäureanhydrid, in Gegenwart von Radikalbildnern, erreicht (J 59 066 452). Die Verwendung von Radikalbildnern führt aber zu einer unerwünschten und unkontrollierten partiellen Vergelung der Polyphenylenetherphase.

Es ist daher vorgeschlagen worden, die Verträglichkeit beider Polymeren durch Zusatz einer ausreichenden Menge eines Fließmittels z. B. eines organischen Phosphats (EP-OS 0 129 825) oder eines Diamids (EP-OS 0 115 218) zu erhöhen. Solche Lösungen vermögen nicht zu überzeugen, da die verbesserte Verträglichkeit mit einer erheblich reduzierten Wärmeformbeständigkeit in Kauf genommen werden muß. Den gleichen Nachteil weisen Formmassen auf, denen Copolymere aus Styrol und ungesättigten Säurederivaten zugesetzt worden sind (EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuk-Polymeren bestehen. Als dritte Komponente wird ein flüssiges Dienpolymer, ein Epoxid oder eine Verbindung mit einer Doppel- oder Dreifachbindung und einer funktionellen Gruppe (wie z. B. Säure, Anhydrid, Ester, Amino-oder Alkoholgruppe) eingesetzt. Die Schlagzähigkeit der erhaltenen Harzmassen reicht aber für viele Anwendungen nicht aus.

Aufgabe der vorliegenen Erfindung war es, thermoplastische Formmassen auf der Grundlage von Polyphenylenethern und Polyamiden bereitzustellen, die zu Formteilen mit einer verbesserten Schlagzähigkeit unter weitgehendem Erhalt der Wärmeformbeständigkeit verarbeitet werden können.

Es wurden jetzt Formmassen gefunden, die diese Anforderungen erfüllen. Sie bestehen aus

a) einem Polyphenylenether,

b) einem Kammpolymer, das einen Kohlenwasserstoff als Hauptkette und Polyphenylenether als Seitenketten enthält,

c) einem funktionalisierten Polyethylen,

d) einem Polyamid

e) und ggf. weiteren Polymeren und Zusatzstoffen.

Für den unter (a) angeführten Polyphenylenether kommen als Ausgangsverbindungen substituierte Phenole der allgemeinen Formel

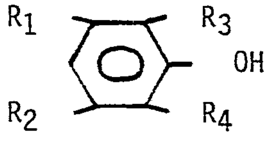

infrage. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z. B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet. Selbstverständlich

können auch Gemische der hier aufgeführten monomeren Phenole eingesetzt werden. Ganz besonders bevorzugt werden Poly(2,6-dimethyl-1,4-phenylenether) mit einer Grenzviskosität zwischen 0,4 und 0,7 ml/g (gemessen in Chloroform bei 25 °C analog zu DIN 53 728).

Die Komponente (b) ist ein Kammpolymer der allgemeinen Formel

A $(B)_n$

Dabei sind an die Hauptkette A, die aus einem Kohlenwasserstoff besteht, n Polyphenylenether-Seitenkette B gebunden. n ist eine ganze Zahl zwischen 2 und 70, vorzugsweise zwischen 5 und 30.

Die Hauptkette A besteht vorzugsweise aus einem Copolymer aus Ethylen, Alpha-Olefin und Polyen - (EPDM-Harz). Bevorzugte Alpha-Olefine besitzen 3 bis 10 C-Atome. Bevorzugte Polyene sind Dicyclopentadien, Hexadien-(1,4) oder Ethylidennorbornen. Das Copolymer enthält vorzugsweise 1 bis 10 Mol-% Polyen. Das EPDM-Harz weist ein Molekulargewicht von mindestens 1 000, insbesondere von 10 000 bis 1 000 000 auf. Bevorzugt liegt das Molekulargewicht zwischen 50 000 und 500 000.

Die Polyphenylenether-Seitenketten werden aus Phenolen der allgemeinen Formel

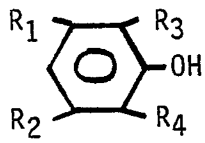

aufgebaut. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z. B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet.

Für die Anfangsglieder der Seitenketten werden Phenole der allgemeinen Formel

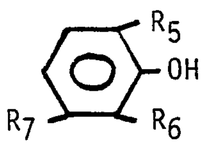 und/oder 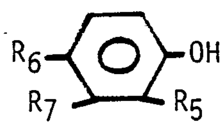

verwendet, in denen die Reste $R_5$, $R_6$ und $R_7$ jeweils ein Halogen, einen Phenylrest oder einen n-Alkylret mit bis zu 6 C-Atomen, vorzugsweise den Methylrest, bedeuten und der Rest $R_7$ auch Wasserstoff sein kann.

Zur Herstellung der Kammpolymeren geht man von einem ungesättigten Kohlenwasserstoffharz, wie z. B. einem Polyalkenylen oder einem EPDM-Harz, aus. Durch katalysierte Umsetzung mit Phenolen, wie sie z. B. in Angew. Makromol. Chem. 24 , 205 (1972) und Angew. Makromol. Chem. 74, 17 (1978) beschrieben sind, wird ein freie phenolische Hydroxylgruppen aufweisender, modifizierter Kohlenwasserstoff hergestellt. In Gegenwart dieses Produktes wird anschließend ein für die Herstellung der Polyphenylenether-Seitengruppen B geeignetes Phenol durch oxidative Kupplung in Gegenwart eines Kupferaminkatalysators polymerisiert (vgl. deutsche Patentanmeldung P 35 09 093.6, "Kohlenwasserstoffharz-Polyphenylenether-Kammpolymere und deren Mischungen mit Polyphenylenethern sowie Verfahren zu ihrer Herstellung", Anmeldungstag 14.03.1985). Man erhält auf diese Weise eine Mischung aus einem reinen Polyphenylenether und einem Kammpolymeren, aus der letzteres durch Ausfällung isoliert werden kann.

Als funktionalisierte Polyethylene der Komponente (c) werden im Sinne der Erfindung Ethylencopolymere verstanden, die Epoxid-, Anhydrid-, Carbonsäure-, Ester-oder Amidgruppen enthalten. Es können gleichzeitig auch mehrere dieser funktionellen Gruppen in den Ethylencopolymeren vorhanden sein.

Methoden zur Einführung von Anhydrid-, Säure-oder Estergruppen werden z. B. in US-PS 3 882 194 und US-PS 3 884 882 beschrieben.

Als funktionalisierte Polyethylene der Komponente (c) gelten im Sinne der Erfindung auch Produkte, die aus

(I) Polyethylen oder Copolymeren des Ethylens mit anderen Olefinen, wozu z. B. EPDM-Harze gehören, und

(II) olefinisch ungesättigten Verbindungen, die wenigstens eine Epoxid-, Anhydrid-, Carbonsäure-, Ester-oder Amidgruppe enthalten, hergestellt werden.

Komponente (II) kann dabei bis zu 30 Masse-%, bezogen auf die Summe der Komponenten (I) und (II), betragen.

Werden diese Verbindungen durch radikalische Copolymerisation von Ethylen mit epoxidgruppenhaltigen Acrylaten wie z. B. Glycidylacrylat hergestellt, so können auch weitere Comonomere wie Acrylsäurealkylester und/oder Vinylacetat eingesetzt werden.

Die Molekulargewichte der funktionalisierten Polyethylene liegen im Bereich zwischen 10 000 und 500 000.

Als Polyamid der Komponente (d) kommen teilkristalline Homopolyamide wie z. B. Polyamid 6, 11, 12, 66, 69, 610, 612 und ihre Modifikationen mit weiteren Dicarbonsäuren, Diaminen oder Aminocarbonsäuren sowie amorphe Polyamide, die z. B. aromatische Dicarbonsäuren und cycloaliphatische Diamine enthalten, in Betracht.

Das Molekulargewicht der Polyamide liegt, ausgedrückt durch den Wert der relativen Lösungsviskosität, gemessen nach den in DIN 53 727 beschriebenen Bedingungen in m-Kresol, zwischen 1,2 und 2,4.

Als weitere Polymere der Komponente (e) sind Kautschuke, die nicht funktionalisiert sind, insbesondere EPDM-Kautschuke gut geeignet. Wird als funktionalisiertes Polyethylen der Komponente (c) eine kristallisierbare, ethylenreiche Verbindung benutzt, dann erweist sich der Zusatz der Komponente (e) als besonders nützlich. EPDM-Kautschuke vom Sequenztyp sind in diesem Falle bevorzugt. Es können auch Gemische von Kautschuken oder Gemische von Kautschuken mit Polyalkylenen, z. B. Polyoctenylenen, verwendet werden.

Weitere Zusatzstoffe sind Pigmente, Farbstoffe, Füllstoffe, Flammschutzmittel, Antistatika, Antioxidantien und Schmiermittel.

Die Komponenten (a) bis (e) können gleichzeitig in der Schmelze miteinander vermischt werden. Man kann auch eine Mischung der Komponenten (a) und (b) mit den Komponenten (c) bis (e) in der Schmelze mischen.

Polymermischungen, die man dabei erhält, sind zwar in der Regel schlagzäher als nur aus Polyphenylenether und Polyamid bestehende Mischungen, aber deutlich spröder als z. B. schlagzäh modifizierte Polyphenylenether-oder Polyamidformmassen.

Die besten Ergebnisse erzielt man durch Vermischen einer Schmelze des Polyamids mit einer zuvor hergestellten Schmelzemischung der Komponenten (a), (b), (c) und (e). Dieses Verfahren kann einstufig oder zweistufig ausgeführt werden.

Beim zweistufigen Verfahren stellt man zunächst aus den Komponenten (a), (b), (c) und (e) durch Schmelzemischen eine Vorformmasse her, die man in einer zweiten Stufe wiederaufschmilzt und mit der Schmelze des Polyamids vermischt.

Beim einstufigen Verfahren bedient man sich eines kontinuierlichen Kneters mit mehreren Einläufen, in dessen ersten man die Komponenten (a), (b), (c) und (e) einführt und dann aufschmilzt und vermischt. Über einen späteren Einlauf wird dann festes oder aufgeschmolzenes Polyamid zugegeben.

Das Mischen der Schmelzen geschieht bei Massetemperaturen 20 bis 80 °C oberhalb der Schmelzetemperatur des Polyamids, mindestens jedoch bei 240 °C und dauert 30 Sekunden bis 5 Minuten.

Die erfindungsgemäßen Formmassen weisen eine erhöhte Wärmeformbeständigkeit und Schlagfestigkeit auf.

Die Erfindung wird durch folgende Beispiele verdeutlicht:

## Beispiel 1

Zu einer Mischung aus 2 kg EPDM-Harz (hergestellt aus 48 Masse-% Ethylen, 42 Masse-% Propylen und 10 Masse-% 5-Ethyliden-bicyclo-[2,2,1]-hept-2-en, Mooney-Viskosität (1 + 4) bei 100 °C = 45 $M_w$ = 160 000) und 17,8 kg 2,6-Dimethylphenol wird bei 150 °C unter Stickstoff eine Lösung aus 50 g Methansulfonsäure, 200 g Xylol und 200 g 2,6-Dimethylphenol zugetropft.

Man läßt 4 Stunden reagieren und verdünnt nach Abkühlung auf 100 °C mit 50 kg Toluol. Die auf Raumtemperatur abgekühlte Lösung wäscht man mit Wasser neutral und trocknet danach über $Na_2SO_4$.

Eine Probe der erhaltenen Lösung, die das modifizierte EPDM-Harz und 2,6-Dimethylphenol enthält, wird aufgearbeitet. Die Analyse ergibt, daß das modifizierte EPDM-Harz einen Gehalt von 1,5 Masse-% Phenol (nach IR und UV) aufweist.

## Beispiel 2

In einem Rührkessel legt man eine Mischung aus 140 kg Toluol, 26 kg Methanol, 3,6 kg Morpholin und eine Lösung von 0,2 kg $CuCO_3$ in 0,7 kg Bromwasserstoffsäure (48 %ig) vor. Unter Rühren (250 U/min) und Einleiten eines Luftstroms von 8 $m^3/h$ gibt man die in Beispiel 1 hergestellte Lösung von 2,6-Dimethylphenol und modifiziertem EPDM-Harz in Toluol über einen Zeitraum von 30 Minuten zu. 60 Minuten nach Beendigung der Zugabe wird die Polykondensation durch Stoppen mit wäßriger Essigsäure abgebrochen. Die Polymermischung wird durch Zugabe von Methanol aus der organischen Phase gefällt und anschließend filtriert und getrocknet.

Ausbeute = 19 kg

J = 75 ml/g

NMR-Spektren : 22 % H aromatisch Delta = 6,5 (s)

68 % H Ar-$\underline{CH}_3$ Delta = 2,1 (S)

7 % H Alk.-$\underline{CH}_2$-Alk. Delta = 1,3 (m)

3 % H Alk.-$\underline{CH}_3$ Delta = 0,9 (m)

Laut GPC-Analyse lag eine Mischung aus 75 Masse-% reinem Poly(2,6-dimethyl-1,4-phenylenether) (PPE) und 25 Masse-% eines PPE-EPDM-Kammpolymeren vor.

$M_w$ (PPE) = ca. 35 000

$M_w$ (PPE/EPDM) = ca. 400 000

Die Polymermischung enthält 10 Masse-% EPDM-Harz.

Beispiele 3 bis 7, Vergleichsbeispiele A und B

Zusammensetzung und Kerbschlagzähigkeit der Polymermischungen gehen aus Tabelle 1 hervor.

Bei den Beispielen 3 und 4 und bei Vergleichsbeispiel A werden die Polymermischungen einstufig in einem kontinuierlichen Kneter hergestellt.

Bei den Beispielen 5 bis 7 und bei Vergleichsbeispiel B wird zunächst eine Vorformmasse hergestellt, die dann mit Polyamid 12 in der Schmelze vermischt wird.

Den Mischungen werden jeweils, bezogen auf die Gesamtmischung, 0,5 Masse-% Didecylphenyl-phospit (Handelsprodukt: IRGASTAB$^R$ CH 300 von Ciba-Geigy), 0,5 Masse-% 3-(3,5-di-tert.-butyl-4-hydroxyphenyl)-propionsäureoctadecylester (Handelsprodukt: IRGANOX$^R$ 1076 von Ciba-Geigy) und 1,5 Masse-% oxidiertes Polyethylenwachs mit einem Molekulargewicht von 1 500 (Handelsprodukt: VESTOWAX$^R$ AO 1539, Hersteller: Hüls AG) zugesetzt.

Zylindertemperatur bei allen Versuchen: 280 °C.

Tabelle 1

| Beisp. | Polymerengemisch | | | Kerbschlagzähigkeit (kJ/m²) |
|---|---|---|---|---|
| A | 15 Teile<br>5 "<br>80 " | PPE<br>EPDM-PPE 1)<br>PA 12 2) | | 5 |
| 3 | 15 Teile<br>5 "<br>5 "<br>80 " | PPE<br>EPDM-PPE<br>PE mit Epoxidgruppen 3)<br>PA 12 | | 7 |
| 4 | 15 "<br>5 "<br>5 "<br>5 "<br>80 " | PPE<br>EPDM-PPE<br>PE mit Epoxidgruppen<br>EPDM<br>PA 12 | | 13 |
| 5 | 15 "<br>5 "<br>5 "<br>80 " | PPE<br>EPDM-PPE<br>PE mit Epoxidgruppen<br>PA 12 | Vor-<br>form-<br>masse | 29 |
| 6 | 15 "<br>5 "<br>5 "<br>5 "<br>80 " | PPE<br>EPDM-PPE<br>PE mit Epoxidgruppen<br>EPDM<br>PA 12 | Vor-<br>form-<br>masse | kein Bruch |
| B | 18 "<br>7 "<br>75 " | PPE 4)<br>EPDM<br>PA 12 | Vor-<br>formm. | 7 |
| 7 | 15 "<br>5 "<br>5 "<br>75 " | PPE<br>EPDM-PPE<br>funktional. EPDM 5)<br>PA 12 | Vor-<br>form-<br>masse | 15 |

1) Entsprechend Beispiel 2 wurde eine Mischung aus 75 Masse-% PPE und 25 Masse-% EPDM-PPE-Kammpolymer eingesetzt. Die Mischung enthielt 10 Masse-% EPDM-Harz.

2) Polyamid 12 mit $Eta_{rel}$ = 2,15

3) Ethylen-Acrylsäureglycidylester-Copolymer mit 5 Masse-% Acrylsäureglycidylester, $\overline{M}_v$ = 38 000

4) PPE mit J = 55 ml/g

5) VESTAMID[R] X 4496, Hersteller: Hüls AG, D-4370 Marl

## Ansprüche

1. Thermoplastische Formassen aus
a) einem Polyphenylenether,
b) einem Kammpolymer, das einen Kohlenwasserstoff als Hauptkette und Polyphenylenether als Seitenketten enthält,
c) einem funktionalisierten Polyethylen,
d) einem Polyamid
e) und ggf. weiteren Polymeren und Zusatzstoffen.

2. Thermoplastische Formmassen nach Anspruch 1,
dadurch gekennzeichnet,
daß Komponente a ein Poly(2,6-dimethyl-1,4-phenylenether) mit einer Grenzviskosität von 0,4 bis 0,7 ml/g ist.

3. Thermoplastische Formmassen nach den Ansprüchen 1 und 2,
dadurch gekennzeichnet,
daß an die Hauptkette des Kammpolymeren Phenolgruppen der Formeln

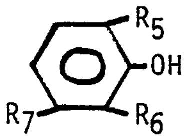 und/oder 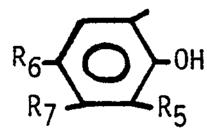

gebunden sind und an deren Sauerstoff Phenole der Formel

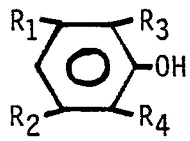

ankondensiert sind, wobei die Reste $R_1$ bis $R_7$ folgende Bedeutung haben:
$R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen oder $R_3$ und $R_4$ haben unabhängig voneinander jeweils die Bedeutung eines n-Alkylrestes mit bis zu 6 C-Atomen. Die Reste $R_5$, $R_6$ und $R_7$ bedeuten jeweils ein Halogen, einen Phenylrest oder einen n-Alkylrest mit bis zu 6 C-Atomen, vorzugsweise den Methylrest, wobei der Rest $R_7$ auch Wasserstoff sein kann.

4. Thermoplastische Formmassen nach den Ansprüchen 1 bis 3,
dadurch gekennzeichnet,
daß die Seitenketten des Kammpolymeren aus Poly(2,6-dimethyl-1,4-phenylenether) aufgebaut sind.

5. Thermoplastische Formmassen nach den Ansprüchen 1 bis 4,
dadurch gekennzeichnet,
daß die Hauptkette des Kammpolymeren von einem EPDM-Harz abgeleitet ist.

6. Thermoplastische Formmassen nach den Ansprüchen 1 bis 5,
dadurch gekennzeichnet,
daß im Durchschnitt pro Molekül an der Hauptkette des Kammpolymeren 2 bis 70, vorzugsweise 5 bis 30 Polyphenylenether-Seitenketten stehen.

7. Thermoplastische Formmassen nach den Ansprüchen 1 bis 6,
dadurch gekennzeichnet,
daß die Komponente c ein Ethylencopolymeres ist, das Epoxid-, Anhydrid-, Carbonsäure-, Ester-oder Amidgruppen enthält.

8. Thermoplastische Formmassen nach den Ansprüchen 1 bis 6,
dadurch gekennzeichnet,
daß die Komponente c ein Produkt ist, das durch Umsetzung von
-Polyethylen oder Copolymeren des Ethylens mit anderen Olefinen mit
-olefinisch ungesättigten Verbindungen, die wenigstens eine Epoxid-, Anhydrid-, Carbonsäure-, Ester-oder Amidgruppe enthalten,
hergestellt wird.

9. Thermoplastische Formmassen nach den Ansprüchen 1 bis 8, dadurch gekennzeichnet,
daß die Komponente d ein teilkristallines Homopolyamid mit einer relativen Viskosität von 1,2 bis 2,4 ist.

10. Verfahren zur Herstellung thermoplastischer Formmassen nach den Ansprüchen 1 bis 9,
dadurch gekennzeichnet,
daß man die Komponenten a bis e in der Schmelze vermischt.

11. Verfahren nach Anspruch 10,
dadurch gekennzeichnet,
daß man die Komponenten a und b zusammen einsetzt.

12. Verfahren nach den Ansprüchen 10 und 11,
dadurch gekennzeichnet,
daß man bei einer Temperatur, die 20 bis 100 °C über dem Schmelzpunkt des Polyamides, mindestens jedoch bei 240 °C liegt, eine Polyamidschmelze mit einer Schmelzemischung der Komponenten a, b, c und e vermischt.

Europäisches Patentamt

# EUROPÄISCHER RECHERCHENBERICHT

Nummer der Anmeldung

EP 86115869.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A2 - 0 164 767 (GENERAL ELECTRIC COMPANY)<br>* Anspruch 1 *<br>-- | 1 | C 08 L 77/00<br>//(C 08 L 77/00<br>C 08 L 71:04) |
| P,A | EP - A2 - 0 194 423 (HÜLS AKTIENGESELLSCHAFT)<br>* Ansprüche; Spalte 1, letzter Satz *<br>---- | 1-6 | |

| RECHERCHIERTE SACHGEBIETE (Int. Cl.4) |
|---|
| C 08 L 77/00<br>C 08 L 71/00 |

Der vorliegende Recherchenbericht wurde für alle Patentansprüche erstellt.

| Recherchenort | Abschlußdatum der Recherche | Prüfer |
|---|---|---|
| WIEN | 22-04-1987 | KALTENEGGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82